**Europäisches Patentamt**

**European Patent Office**

**Office européen des brevets**

(11) Numéro de publication: **0 069 636**
**A1**

## (12) DEMANDE DE BREVET EUROPEEN

(21) Numéro de dépôt: **82401165.4**

(22) Date de dépôt: **24.06.82**

(51) Int. Cl.³: **H 01 M 4/62**
**C 22 C 11/08**

(30) Priorité: **26.06.81 FR 8112603**

(43) Date de publication de la demande:
**12.01.83 Bulletin 83/2**

(84) Etats contractants désignés:
**AT BE CH DE FR GB IT LI LU NL SE**

(71) Demandeur: **COMPAGNIE EUROPEENNE D'ACCUMULATEURS Société anonyme dite:**
**16, rue de la Baume**
**F-75008 Paris(FR)**

(72) Inventeur: **Bardin, Roland**
**11, avenue Roberto Rossellini**
**F-69100 Villeurbanne(FR)**

(72) Inventeur: **Mack, Joel**
**Poule les Echarmeaux**
**F-69870 Lamure Sur Azergues(FR)**

(72) Inventeur: **Counioux, Jean-Jacques**
**45, avenue Galline**
**F-69100 Villeurbanne(FR)**

(74) Mandataire: **Weinmiller, Jürgen et al,**
**Zeppelinstrasse 63**
**D-8000 München 80(DE)**

(54) **Alliages destinés à la réalisation des supports d'électrodes d'accumulateurs au plomb, et leur procédé de fabrication.**

(57) Alliages destinés à la réalisation des supports d'électrodes d'accumulateurs au plomb, et leur procédé de fabrication.

Alliage à base de plomb et d'antimoine comprenant en poids de 0,05% à 4% d'antimoine.

Selon l'invention, l'alliage, exempt de baryum, comprend également du magnésium, la teneur en magnésium étant comprise entre 0,02% et 0,3%.

Alliages destinés à la réalisation des supports d'électrodes d'accumulateurs au plomb, et leur procédé de fabrication.

La présente invention concerne de nouveaux alliages pour la fabrication des supports d'électrodes d'accumulateurs au plomb et plus précisément des alliages à base de plomb et d'antimoine contenant moins de 4% en poids d'antimoine.

Les supports d'électrodes doivent présenter de bonnes caractéristiques mécaniques et chimiques. L'addition d'antimoine confère au plomb des propriétés très intéressantes. Outre les caractéristiques mécaniques, les alliages riches en antimoine présentent une bonne coulabilité. De plus, l'antimoine favorise l'accrochage de la pâte active sur les supports en cyclage.

En contrepartie, l'antimoine, qui a tendance à passer en solution au cours du fonctionnement de l'accumulateur, favorise la corrosion des supports et le phénomène d'auto décharge, et diminue la surtension de dégagement d'hydrogène.

Il est donc nécessaire de diminuer la teneur en antimoine. L'addition d'un nouvel élément doit permettre de maintenir, voire d'améliorer, les propriétés de l'alliage appauvri en antimoine.

L'invention a pour objet un alliage à base de plomb et d'antimoine contenant en poids entre 0,05% et 4% d'antimoine, destiné à la réalisation de supports d'électrodes d'accumulateurs au plomb, caractérisé par le fait que ledit alliage, exempt de baryum, comprend également du magnésium, la teneur en magnésium étant comprise entre 0,02% et 0,3%.

Selon un mode de réalisation préféré de l'invention, l'alliage comprend environ 1,8% d'antimoine et 0,15% de magnésium.

On peut également introduire dans l'alliage plomb-antimoine-magnésium les additifs que l'on retrouve généralement dans les alliages plomb-antimoine pour la réalisation des supports d'électrodes, tels que l'étain, l'arsenic, le cuivre et le soufre, et qui sont destinés notamment à améliorer la coulabilité de ces alliages ainsi que leur tenue mécaniq. .

Ainsi, l'alliage conforme à l'invention peut contenir, en poids :
- de 0,05 à 0,3% d'étain et notamment 0,10% dans le cas où la teneur en antimoine est voisine de 1,8% et celle en magnésium de 0,15%,

- de 0,05% à 0,5% d'arsenic et notamment 0,15% dans le cas où la teneur en antimoine est voisine de 1,8% et celle en magnésium de 0,15%.

- environ 0,075% de cuivre

- environ 0,006% de soufre

L'absence de baryum, dans l'alliage plomb-antimoine-magnésium conforme à l'invention, destiné à la réalisation de supports d'électrodes d'accumulateurs au plomb est essentielle. En effet, si l'introduction de baryum dans un alliage ternaire plomb-antimoine-magnésium peut accroître la résistance au fluage, on a pu constater par contre que de tels alliages présentaient des défauts les rendant inaptes à l'utilisation revendiquée par la Demanderesse.

Ainsi, de tels alliages comportant du baryum, tels que décrit par exemple dans le brevet français n° 2 056 137 déposé le 24 février 1970, outre le fait qu'ils sont difficiles à réaliser en raison de l'oxydation du baryum dans le bain de coulée, ne peuvent convenir car la présence du baryum d'une part crée dans l'alliage une structure inhomogène entrainant des risques de fissuration lors de la fabrication et lors de l'utilisation, d'autre part est à l'origine d'une corrosion massique importante, se traduisant par une durée de vie limitée.

Plus précisément, on a comparé un alliage de plomb A, conforme à l'invention, comprenant 1,8% d'antimoine et 0,15% de magnésium à un alliage de plomb B comprenant 1,8% d'antimoine, 0,15% de magnésium et 1% de baryum.

Les mesures de corrosion réalisées par balayage potentiométrique entre 0,6 V et 1,6 V, par rapport à l'électrode au sulfate mercureux, montrent que la corrosion de l'alliage B est deux fois supérieure à celle de l'alliage A.

Par ailleurs, l'examen cristallographique montre que l'alliage B présente une structure grossière dont les grains ont des dimensions très variables, dans le rapport 1 à 10 (dimensions des grains de 100 à 1000 microns, moyenne de l'ordre de 400 microns) alors que l'alliage A présente une structure régulière, bien plus fine, les grains ayant sensiblement les mêmes dimensions, de l'ordre de 40 microns.

La structure grossière et inhomogène de l'alliage B entraîne la présence de fissuration lors de la réalisation de supports d'électrodes.

D'autre part, lors de l'utilisation dans l'acide sulfurique, il se produit une corrosion intergranulaire fissurante, entraînant une durée de vie très faible.

Conformément à l'invention, en raison des différences de densité entre le plomb et le magnésium et des risques de formation de composés intermédiaires peu solubles ($PbMg_2$ et surtout $Mg_3Sb_2$), on procède en deux temps pour l'élaboration de l'alliage. Dans la première étape, un alliage mère, à 1% en poids de magnésium, est constitué par mélange à l'état liquide d'alliage plomb-antimoine et de magnésium pur. L'alliage définitif est obtenu, dans la seconde étape, par fusion de quantités aliquotes d'alliage mère et d'alliage plomb-antimoine.

On a pu constater que l'introduction du magnésium dans l'alliage plomb-antimoine n'affectait pas la surtension de dégagement d'hydrogène. Par ailleurs, la corrosion de l'électrode positive n'est pas accrue par la présence du magnésium.

L'analyse micrographique montre que la microstructure d'un alliage selon l'invention recuit à 220°C est d'autant plus fine que la teneur en magnésium est élevée. L'addition de 0,03% en poids de Mg diminue la taille des grains d'un alliage $PbSb_{1,8}$ de 25 fois environ. On obtient un rapport de l'ordre de 500 dans le cas d'un alliage à 0,15% en poids de magnésium, ce qui est particulièrement avantageux lorsque l'on sait que la corrosion intergranulaire diminue avec l'affinage des grains.

Les propriétés mécaniques des alliages ternaires plomb-antimoine-magnésium sont sensiblement améliorées par rapport à celles des alliages binaires plomb-antimoine correspondants. Le tableau ci-dessous montre, à titre d'exemple, l'évolution de la dureté et de la charge à la rupture en fonction de la composition pour certains alliages :

| Composition de l'alliage (pourcentage pondéral) | | Charge à la rupture (MPa) | Dureté Brinell (MPa) | |
|---|---|---|---|---|
| Sb | Mg | (1) | (1) | (2) |
| 0 | 0 | 13,7 | 4 | |
| 1,8 | 0 | 18 | 8,0 | 8,5 |
| 1,8 | 0,01 | 18 | 8,0 | |
| 1,8 | 0,03 | 20 | 9,5 | 10,5 |
| 1,8 | 0,09 | 21,5 | 11,6 | 13,4 |
| 1,8 | 0,15 | 23,3 | 12,8 | 14,5 |
| 0,05 | 0,1 | | 17,2 | |

(1) après un recuit de 20 h à 220°C

(2) après maintien à 220°C pendant 1 h, suivi d'une trempe à l'eau

Les propriétés mécaniques des alliages ternaires conformes à l'invention sont améliorées par un maintien préalable de l'alliage à 220°C pendant une heure, suivi d'une trempe à l'eau.

Des résultats semblables et même légèrement supérieurs peuvent être obtenus par une trempe sortie coquille, plus économique.

La cinétique de vieillissement des alliages ternaires n'est pas modifiée par la teneur en magnésium. Elle est la même dans le cas d'une trempe sortie coquille ou du traitement consistant en un maintien de 1 h à 220°C, suivi d'une trempe à l'eau.

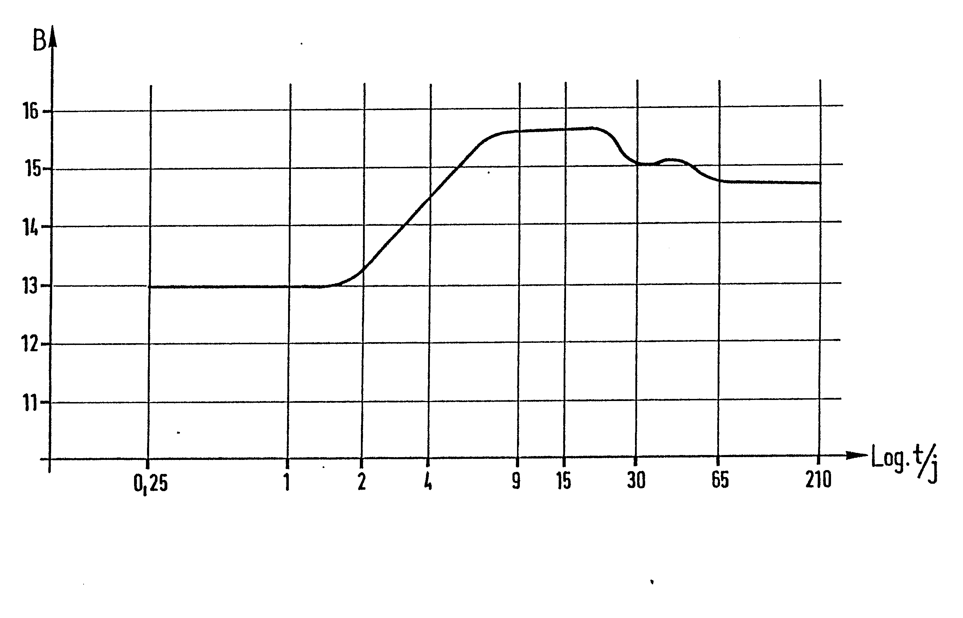

A titre d'exemple, la figure unique représente, en fonction du temps, à 25°C, l'évolution de la dureté d'un alliage au plomb à 0,15% en poids de Mg et 1,8% en poids de Sb.

La dureté B, en MPa, a été portée en ordonnée ; en abscisse on a porté le logarithme du temps, Logt, en jours.

D'une manière générale, les meilleures propriétés mécaniques sont obtenues après une dizaine de jours. L'alliage se stabilise au bout de 30 à 60 jours.

L'invention a bien entendu également pour objet les supports d'électrodes constitués par les alliages précédemment définis, les électrodes comportant de tels supports et les accumulateurs au plomb comprenant ces électrodes.

REVENDICATIONS

1/ Alliage à base de plomb et d'antimoine contenant en poids entre 0,05% et 4% d'antimoine, destiné à la réalisation de supports d'électrodes d'accumulateurs au plomb, caractérisé par le fait que ledit alliage, exempt de baryum, comprend également du magnésium, la teneur en magnésium étant comprise entre 0,02% et 0,3%.

2/ Alliage selon la revendication 1, caractérisé par le fait qu'il comprend environ 1,8% d'antimoine et 0,15% de magnésium.

3/ Alliage selon l'une des revendications 1 et 2, caractérisé par le fait qu'il comprend également de l'étain, la teneur en étain étant comprise entre 0,05% et 0,3%.

4/ Alliage selon l'une des revendications 1 à 3, caractérisé par le fait qu'il comprend également de l'arsenic, la teneur en arsenic étant comprise entre 0,05% et 0,5%.

5/ Alliage selon l'une des revendications 1 à 4, caractérisé par le fait qu'il comprend environ 0,075% de cuivre.

6/ Alliage selon l'une des revendications 1 à 5, caractérisé par le fait qu'il comprend environ 0,006% de soufre.

7/ Procédé de fabrication d'un alliage selon l'une des revendications 1 ou 2, caractérisé par le fait que dans un premier temps on réalise un alliage mère à 1% en poids de magnésium par mélange à l'état liquide d'alliage plomb-antimoine et de magnésium pur, puis dans un deuxième temps l'alliage définitif est obtenu par fusion de quantités aliquotes d'alliage mère et d'alliage plomb antimoine.

8/ Supports pour électrodes constitués par un alliage selon l'une des revendications 1 à 6.

9/ Electrodes comportant des supports selon la revendication 8.

10/ Accumulateur au plomb comportant des électrodes selon la revendication 9.

1/1

0069636

Office européen
des brevets

RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | FR-A-2 056 137  (REDEMAT S.A.)<br><br>* revendication 2; page 1, lignes 18-20,  26-28;  page  3,  lignes 10-14 *<br><br>--- | 1,2,3, 6,8,9, 10 | H 01 M  4/68<br>C 22 C  11/08 |
| A | US-A-4 158 563  (R.K. HEBBAR et al.)<br>* revendication 1 *<br><br>--- | | |
| A | US-A-4 159 908  (M.V. RAO et al.)<br>* revendications 1,3,4,5 *<br><br>--- | | |
| A | DE-C- 809 972  (L. SEMPEL)<br><br>* revendications 1,4 *<br><br>--- | | |
| A | FR-A- 702 261 (SIEMENS-SCHUCKERTWERKE)<br>* résumé point 1,2a,b *<br><br>--- | | |
| A | US-A-2 148 741 (BRUCE W. GOMSER)<br>*  revendication  8;  page  8, colonne de gauche, lignes 37-74 *<br><br>---<br><br>-/- | | |

DOMAINES TECHNIQUES
RECHERCHES (Int. Cl. ³)

H 01 M  4/68
C 22 C  11/08

Le présent rapport de recherche a été établi pour toutes les revendications

| Lieu de la recherche | Date d'achèvement de la recherche | Examinateur |
|---|---|---|
| LA HAYE | 22-09-1982 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | CHEMICAL ABSTRACTS, vol.53, no.2, 1959, colonne 904g, Columbus, Ohio (US) V.P. MASHOVETS: "Effect of impurities of lead-antimony alloys on the functioning of storage cells. IV.Tests with experimental batteries with alloys containing added impurities" & Zhur. Priklad. Khim. 31, 1355-60 (1958) --- | | |
| A | SU-A- 87 135 ----- | | |

|  |  | DOMAINES TECHNIQUES RECHERCHES (Int. Cl. ³) |
|---|---|---|
|  |  |  |

Le présent rapport de recherche a été établi pour toutes les revendications

| Lieu de la recherche | Date d'achèvement de la recherche | Examinateur |
|---|---|---|
| LA HAYE | 22-09-1982 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82